# EUROPEAN PATENT SPECIFICATION

(11) **EP 2 048 498 B1**
(45) Date of publication and mention of the grant of the patent: **03.10.2012**
(21) Application number: 07791811.8
(22) Date of filing: 02.08.2007
(51) Int. Cl.: G01N 21/78, G01N 33/48, G01N 33/52, G01N 33/58, G01N 35/00

(54) **Analysis method and analysis apparatus**
Analyseverfahren und Analysevorrichtung
Procédé et appareil d'analyse

(30) Priority: 04.08.2006 JP 2006212849
(43) Date of publication of application: 15.04.2009
(73) Proprietor: ARKRAY, Inc., Kyoto-shi, Kyoto 601-8045 (JP)
(72) Inventor: TANJI, Hideki, Kyoto-shi Kyoto 601-8045 (JP)
(74) Representative: Jones, Elizabeth Louise
(86) International application number: PCT/JP2007/065131
(87) International publication number: WO 2008/016096

(56) References cited:
- JP-A- 04 507 144
- JP-A- 11 094 818
- JP-A- 2001 133 406
- JP-A- 2006 125 981
- US-A- 4 256 694
- US-A1- 2003 185 710
- US-B1- 6 436 347

## Description

### TECHNICAL FIELD

The present invention relates to a method and an apparatus for analyzing a particular component contained in a sample based on the state after the reaction of the sample with a reagent.

### BACKGROUND ART

In a widely known method for analyzing e.g. the concentration of a particular component contained in a sample, the sample is caused to react with a reagent, and the degree of color development after the reaction of the sample and the reagent is analyzed by an optical technique. To perform this analysis easily and cleanly, a reagent in a dry state is generally used (see e.g. Patent Document 1). In this case, the particular component contained in the sample is caused to react with the reagent using only the moisture contained in the sample as the medium. Thus, in this analysis method, it is not necessary to additionally prepare a liquid for causing the reaction of the sample with the reagent. Moreover, much waste liquid is not generated by the analysis. Thus, the apparatus used for the analysis and the surroundings are kept dry. Thus, this method ensures size reduction of the analysis apparatus and enhancement of the hygiene.

However, when the moisture contained in the sample is evaporated excessively, the reaction of the sample with the reagent is suppressed. To prevent this, in the structure disclosed in Patent Document 1, the space used for the reaction of the sample with the reagent is hermetically sealed. However, when the reaction space is hermetically sealed, the evaporation of the moisture contained in the sample may be excessively suppressed. In this case, the reaction of the sample with the reagent may proceed excessively. In this way, since the degree of progress of the reaction of the sample with the reagent depends on the degree of evaporation of the moisture contained in the sample, the measurement result of the particular component contained in the sample is inaccurate.

Patent Document 1: JP-A-8-339507

JP-A-4 507144 (Figs. 1-3) discloses an analysis method and apparatus in which a step of reacting a water containing sample with a reagent and a step of measuring the concentration of a specific component of the sample is performed, whereby the state of the reaction solution after reaction between the sample and reagent is used to measure said concentration. In addition both the reacting and the measuring steps are conducted whilst the moisture content in the air in the space where the sample and reagent are accommodated is directly or indirectly measured, whereby this moisture content measurement is used to correct the concentration measurement result of the specific component. JP-A-4 507144 further discloses that a constant temperature is maintained inside the measurement chamber, that the reagent used is initially in a dry state, that the correction of the measurement results make use of polynomial expression and that the measuring is performed optically.

### DISCLOSURE OF THE INVENTION

The present invention has been proposed under the circumstances described above. It is, therefore, an object of the present invention to provide an analysis method and an analysis apparatus which are capable of preventing the measurement results from varying due to the evaporation of moisture contained in a sample.

According to a first aspect of the present invention, there is provided an analysis method as defined in the appended claims.

In a preferred embodiment of the present invention, the reagent is dry before the reaction with the sample.

In a preferred embodiment of the present invention, the space accommodating the sample and the reagent is maintained at a constant temperature in the reaction step and the measurement step.

In a preferred embodiment of the present invention, the correction step comprises correcting the measurement result of the concentration of the particular component using a polynomial including a variable representing the amount of moisture contained in the air.

In a preferred embodiment of the present invention, the polynomial is a linear expression.

In a preferred embodiment of the present invention, the measurement step is performed by an optical technique.

According to a second aspect of the present invention, there is provided an analysis apparatus as defined in the appended claims.

In a preferred embodiment of the present invention, the reagent is dry before the reaction with the sample.

In a preferred embodiment of the present invention, the analysis apparatus further comprises a temperature controller for maintaining the temperature in the reaction space and the measurement space constant.

In a preferred embodiment of the present invention, the corrector corrects the measurement result obtained by the particular component concentration measurer using a polynomial including a variable representing the amount of moisture contained in the air.

In a preferred embodiment of the present invention, the polynomial is a linear expression.

In a preferred embodiment of the present invention, the particular component concentration measurer performs the measurement by an optical technique.

Other features and advantages of the present invention will become more apparent from the detailed description given below with reference to the accompanying drawings.

### BRIEF DESCRIPTION OF THE DRAWINGS

Fig. 1 is an overall perspective view showing an analysis apparatus according to the present invention.
Fig. 2 is a schematic sectional view showing the analysis apparatus according to the present invention.
Fig. 3 is a sectional view showing a principal portion of a test piece used for an analysis method according to the present invention.
Fig. 4 is a graph showing the correction results of Example 1.
Fig. 5 is a graph showing the correction results of Example 2.
Fig. 6 is a graph showing the correction results of Example 3.

### BEST MODE FOR CARRYING OUT THE INVENTION

Preferred embodiments of the present invention will be described below with reference to the accompanying drawings.

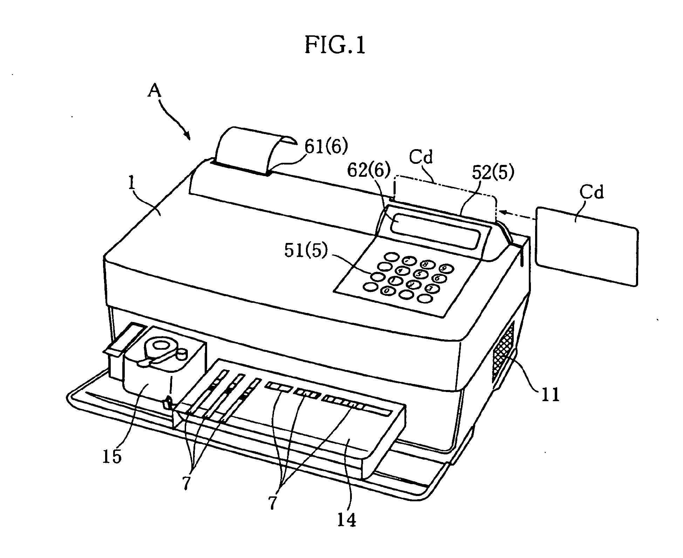

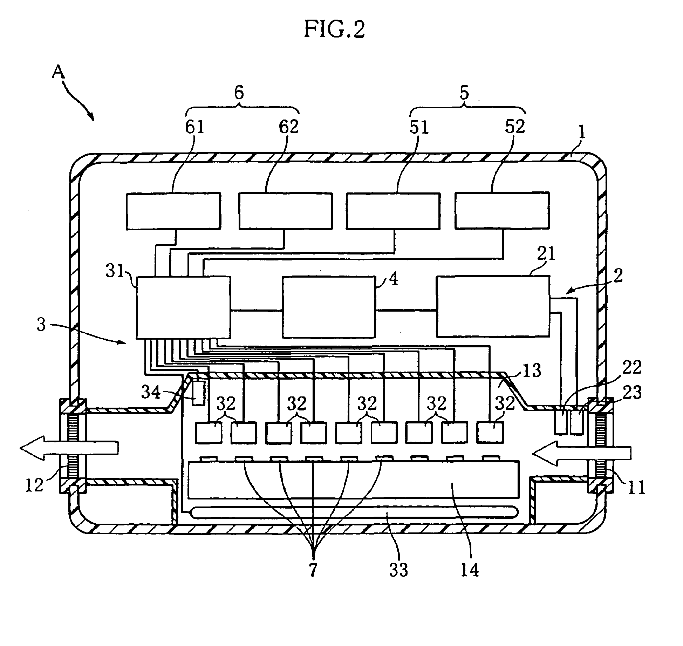

Figs. 1 and 2 show an example of analysis apparatus according to the present invention. The analysis apparatus A of this embodiment includes a housing 1, a moisture measurer 2, a particular component concentration measurer 3, a correction controller 4, an input means 5 and an output means 6. The analysis apparatus A is designed to analyze a particular component contained in a sample such as blood by causing the sample to react with a reagent in a dry state contained in a test piece 7 and measuring the degree of color development of the reagent after the reaction with the sample.

The housing 1 defines the appearance of the analysis apparatus A1 and accommodates various parts. The housing 1 is made of e.g. resin and includes an air inlet 11, an air outlet 12 and a reaction measurement space 13. The air inlet 11 is provided for taking air from the outside of the analysis apparatus A for introduction into the reaction measurement space 13. The air outlet 12 is provided for discharging air from the reaction measurement space 13 to the outside of the analysis apparatus A. Such introduction and discharge of air is performed using e.g. electric fan (not shown).

The reaction measurement space 13 is used for the reaction of a sample with test pieces 7 and the measurement of a particular component contained in the sample. The reaction measurement space accommodates at least a table 14. The table 14 is used for placing test pieces 7. Thus, in this embodiment, both of the reaction of a sample with test pieces 7 and the measurement are performed in the reaction measurement space 13. Unlike this, however, a reaction space for the reaction of a sample with test pieces 7 and a measurement space for the measurement using the test pieces 7 after the reaction may be separately provided. Further, the reaction measurement space 13 may be defined by the housing 1 itself.

A centrifugal separator 15 is provided on a side of the table 14. The centrifugal separator 15 is used for separating a component suitable for the analysis from the blood which is a sample. The liquid separated by the centrifugal separator 15 is appropriately dropped onto the test pieces 7 by a pipette (not shown) incorporated in the housing 1.

The moisture measurer 2 is provided for measuring the amount of moisture contained in the air taken from the air inlet 11. The moisture measurer includes a moisture measurement controller 21, a temperature sensor 22 and a humidity sensor 23. The temperature sensor 22 and the humidity sensor 23 are arranged adjacent to the air inlet 11 and on the inner side of the housing 1. The temperature sensor 22 measures the temperature of the air taken from the air inlet 11 and includes e.g. a thermistor or a thermocouple. The humidity sensor 23 measures the relative humidity of the air taken from the air inlet 11 and includes e.g. a capacitance-type or electrical resistance-type sensor utilizing a polymeric membrane. The temperature sensor 22 and the humidity sensor 23 are connected to the moisture measurement controller 21. The moisture measurement controller 21 computes the amount of moisture contained in the air taken from the air inlet 11 based on the output signals from the temperature sensor 22 and the humidity sensor 23. The moisture measurer 2 is a means for indirectly measuring the amount of moisture contained in the air in the reaction measurement space 13.

The particular component concentration measurer 3 measures e.g. the concentration of a particular component contained in a sample by an optical technique. The particular component concentration measurer includes an overall controller 31, a plurality of optical sensors 32, a heater 33 and a temperature sensor 34. The optical sensors 32 are arranged to face a plurality of test pieces 7 placed on the table 14. The optical sensors 32 have a function to irradiate the test pieces 7 with light having a predetermined wavelength and a function to receive the light reflected by the test pieces 7. For instance, to achieve high measurement accuracy, dual-wavelength colorimetry is employed which utilizes two kinds of lights having different wavelengths. The optical sensors 32 are connected to the overall controller 31. Based on the output signal from each of the optical sensors 32, the overall controller 31 computes e.g. the concentration of a particular component in the sample. When the sample is blood, examples of the particular component to be measured by the analysis apparatus A include Glu (glucose), UA (uric acid), TC (total cholesterol), TG (triglyceride), UN (blood urea nitrogen), T-Bil (total bilirubin), Ca (calcium), TP (total protein), Alb(albumin), AST (aspartic acid aminotransferase), ALT (alanine aminotransferase), LDH (lactate dehydrogenase), CK (creatine phosphokinase), Hb (hemoglobin), Amy (α-amylase), GGT (gamma-glutamyl transpeptidase), ALP (alkaline phosphatase), Cre (creatinine), HDL (high-density lipoprotein cholesterol), FRA (fructosamine), IP (inorganic phosphorus) and Mg (magnesium).

The heater 33 is provided for raising the temperature of the reaction measurement space 13. The temperature sensor 34 is provided for measuring the temperature of the reaction measurement space 13. The heater 33 and the temperature sensor 34 are connected to the overall controller 31. Based on the measurement results of the temperature sensor 34, the overall controller 31 appropriately applies a voltage to the heater 33 to keep the temperature of the reaction measurement space 13 constant. In this embodiment, to cause the particular component such as enzyme contained in blood as a sample to properly react with the reagent of the test pieces 7, the temperature of the reaction measurement space 13 is maintained at about 37 °C which is close to a general body temperature.

The correction controller 4 corrects the measurement results such as the concentration of a particular component measured by the particular component concentration measurer 3 based on the amount of moisture measured by the moisture measurer 2. The correction controller 4 is connected to the overall controller 31 and the moisture measurement controller 21. The correction controller 4 stores a polynomial for correcting the measurements of the particular component. In this polynomial, the amount of moisture obtained by the moisture measurement controller 21 is included as a variable. Specifically, in this embodiment, the polynomial is a linear expression including a variable representing the amount of moisture.

The input means 5 includes a key input portion 51 and a card input portion 52. The key input portion 51 includes a numeric keypad and is used for operating the analysis apparatus A or inputting data necessary for the analysis by the user of the analysis apparatus A. The card input portion 52 is provided for reading the data stored in e.g. a magnetic card Cd. For instance, the magnetic card Cd stores calibration data and correction data specific to each of the test pieces 7. For instance, the calibration data is used for preventing the measurement results from being influenced by the quality differences of the test pieces 7 depending on the production lots or the change with time of the quality of the test pieces. The correction data is a coefficient of the polynomial stored in the correction controller 4 and determined based on a test performed in advance with respect to each of the test pieces 7. The key input portion 51 and the card input portion 52 are connected to the overall controller 31. The correction data stored in the card input portion 52 is transferred from the overall controller 31 to the correction controller 4.

The output means 6 includes a printer 61 and a liquid crystal display 62. The printer 61 outputs the measurement results of the analysis apparatus A by printing. The liquid crystal display 62 displays the user's instructions for operating the analysis apparatus A or warning messages as well as the measurement results. The printer 61 and the liquid crystal display 62 are connected to the overall controller 31.

For easier description, the overall controller 31, the moisture measurement controller 21 and the correction controller 4 are independently provided in this embodiment. Unlike this, however, a single controller having the functions of the overall controller 31, the moisture measurement controller 21 and the correction controller 4 may be provided.

An example of analysis method using the analysis apparatus A will be described below.

First, a magnetic card Cd corresponding to the test pieces 7 to be used for the analysis is inserted into the card input portion 52, and the content stored in the magnetic card Cd is read. Thus, the data stored in the magnetic card Cd is transferred to the overall controller 31. Then, blood taken from test subjects is supplied into a centrifugal separator 15 using e.g. a dropper. When the user performs input operation using the key input portion 51, the centrifugal separator 15 appropriately separates samples suitable for the analysis from the blood. The samples are applied to the test pieces 7 placed on the table 14 with the pipette.

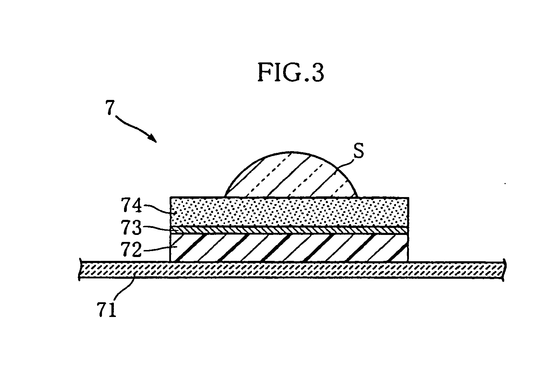

Fig. 3 is an enlarged sectional view of a test piece 7. The test piece 7 includes a mount 71 on which a supporting member 72, a reagent 73 and a porous body 74 are laminated. When the sample S including blood or a separated liquid is applied to the porous body 74 with the pipette, the sample S infiltrates into the porous body 74. When the infiltrated sample S reaches the reagent 73, a particular component contained in the sample S reacts with the reagent 73 using the moisture contained in the sample S as a medium. The temperature of the reaction measurement space 13 is maintained at about 37 °C by the heater 33 and the temperature sensor 34. Thus, the particular component and the reagent 73 react with each other under the conditions similar to those in the human body.

By the user's input operation, air is taken into the apparatus through the air inlet 11. The air is supplied to the reaction measurement space 13. The amount of moisture contained in the air is continuously measured by the moisture measurer 2. The measurement results are successively transferred to the correction controller 4.

Then, the particular component is measured by the particular component concentration measurer 3. Specifically, the test piece 7 in which the reaction has proceeded for a predetermined period after the application of the sample S is irradiated with light of a predetermined wavelength emitted from the optical sensor 32. By receiving the light reflected by the test piece, the degree of color development of the test piece after the reaction of the reagent 73 with the particular component is checked. Based on this result, the overall controller 31 computes the measurement result such as the concentration of the particular component.

Then, the correction controller 4 corrects the measurement result of the particular component. Specifically, the correction controller 4 performs the correction based on the formula Mdr=Md/c, where Md represents the measurement result before the correction and Mdr represents the measurement result after the correction. Herein, the coefficient c is expressed by c=a×Aq+b, which is a linear expression with respect to the amount of moisture Aq measured by the moisture measurer 2. Herein, the coefficients a and b are values specific to the particular component and stored in the magnetic card Cd to be attached to each of the test pieces 7 in this embodiment.

### (Example 1)

As an example of analysis using the analysis apparatus A, ALP, which was a particular component contained in blood, was measured. The measurement results are shown in Table 1 below. Specifically, the ALP concentration was measured with respect to two samples X and Y of different ALP concentrations while changing the conditions of air introduction. The temperature T was measured by the temperature sensor 22, whereas the relative humidity Hm was measured by the humidity sensor 23, based on which the amount of moisture Aq was computed. The coefficients a and b in the above-described correction formula were 0.0089 and 0.9037, respectively, which were determined based on a test performed in advance. The coefficient c was computed based on the coefficients a and b. Using the coefficient c, the above-described correction was performed with respect to the measurement results Md, i.e., the pre-corrected measurement result X (X1) and the pre-corrected measurement result Y (Y1). As a result, the corrected measurement results Mdr, i.e., the corrected measurement result X (X2) and the corrected measurement result Y (Y2) were obtained.

**Table 1**

| T[°C] | Hm [%] | Aq [g/m³] | Md[IU/L] | | Mdr[IU/L] | |
|---|---|---|---|---|---|---|
| | | | (X1) | (Y1) | (X2) | (Y2) |
| 8 | 20 | 1.7 | 287 | 1,215 | 313 | 1,322 |
| 20 | 20 | 3.5 | 273 | 1, 167 | 292 | 1,248 |
| 8 | 50 | 4.2 | 289 | 1,170 | 307 | 1,243 |
| 20 | 50 | 8.7 | 306 | 1,271 | 311 | 1,295 |
| 20 | 80 | 13.8 | 309 | 1,281 | 301 | 1,247 |
| 32 | 50 | 16.9 | 328 | 1,323 | 311 | 1,255 |
| 32 | 80 | 27.0 | 352 | 1,459 | 307 | 1,274 |

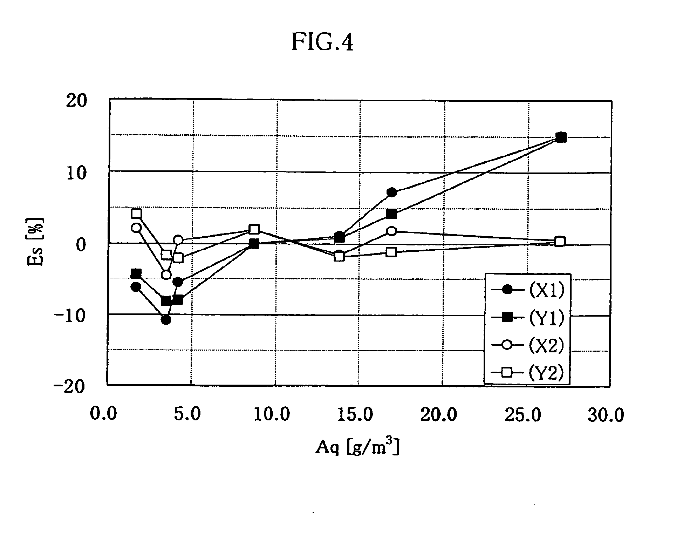

The measurement results Md and Mdr given in Table 1 were examined for the relationship between the amount of moisture Aq and the rate of discrepancy Es relative to the pre-corrected measurement result Md obtained when the temperature T was 20 °C and the relative humidity Hm was 50 %. The results are shown as a graph in Fig. 4.

### (Example 2)

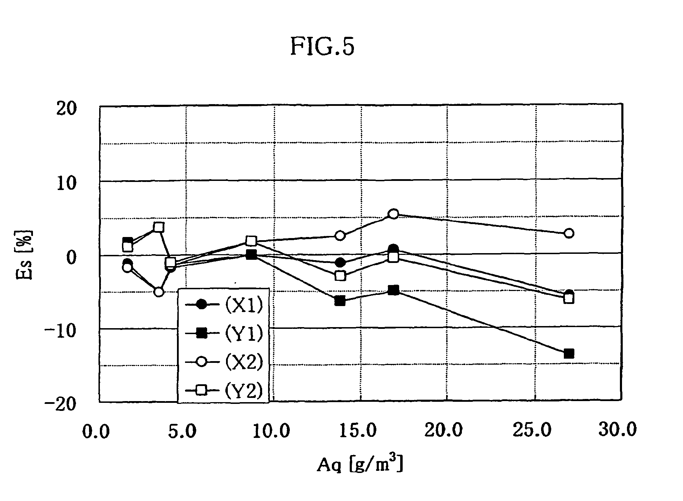

As another example of analysis using the analysis apparatus A, UN, which was a particular component contained in blood, was measured. The measurement results are shown in Table 2 below. The coefficients a and b used for UN were -0.0034 and 1.0120, respectively. The relationship between the amount of moisture Aq and the rate of discrepancy Es before and after the correction are shown as a graph in Fig. 5.

**Table 2**

| T[°C] | Hm [%] | Aq [g/m³] | Md [mg/dl] | | Mdr [mg/dl] | |
|---|---|---|---|---|---|---|
| | | | (X1) | (Y1) | (X2) | (Y2) |
| 8 | 20 | 1.7 | 17.6 | 128.3 | 17.5 | 127.5 |
| 20 | 20 | 3.5 | 16.9 | 130.8 | 16.9 | 130.8 |
| 8 | 50 | 4.2 | 17.5 | 124.6 | 17.5 | 124.9 |
| 20 | 50 | 8.7 | 17.8 | 126.2 | 18.1 | 128.5 |
| 20 | 80 | 13.8 | 17.6 | 118.2 | 18.2 | 122.5 |
| 32 | 50 | 16.9 | 17.9 | 119.9 | 18.8 | 125.7 |
| 32 | 80 | 27.0 | 16.8 | 108.9 | 18.3 | 118.4 |

### (Example 3)

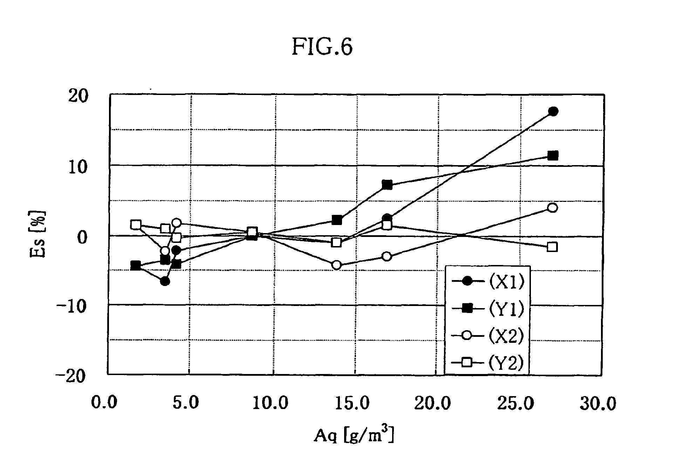

As another example of analysis using the analysis apparatus A, GGT, which was a particular component contained in blood, was measured. The measurement results are shown in Table 3 below. The coefficients a and b used for GGT were 0.0074 and 0.9306, respectively. The relationship between the amount of moisture Aq and the rate of discrepancy Es before and after the correction are shown as a graph in Fig. 6.

**Table 3**

| T[°C] | Hm [%] | Aq [g/m³] | Md [IU/L] | | Mdr [ID/L] | |
|---|---|---|---|---|---|---|
| | | | (X1) | (Y1) | (X2) | (Y2) |
| 8 | 20 | 1.7 | 43.5 | 352.9 | 46.1 | 374.2 |
| 20 | 20 | 3.5 | 42.5 | 355.9 | 44.4 | 372.2 |
| 8 | 50 | 4.2 | 44.5 | 353.5 | 46.3 | 367.6 |
| 20 | 50 | 8.7 | 45.5 | 368.9 | 45.7 | 370.9 |
| 20 | 80 | 13.8 | 45.0 | 376.8 | 43.6 | 365.1 |
| 32 | 50 | 16.9 | 46.6 | 395.3 | 44.2 | 374.8 |
| 32 | 80 | 27.0 | 53.5 | 410.6 | 47.4 | 363.7 |

The advantages of the analysis apparatus A and the analysis method using the apparatus will be described below.

According to this embodiment, errors in the measurement results Md of the particular component due to the amount of moisture Aq in the air taken into the analysis apparatus A are corrected properly. For instance, in Example 1 shown in Fig. 4, the rate of discrepancy Es of the pre-corrected measurement results X and Y lies in a relatively wide range of about -10% to 15%. However, the rate of discrepancy Es of the corrected measurement results X and Y is converged to lie in a relatively narrow range of about -5% to 5%. Further, although the rate of discrepancy Es of the pre-corrected measurement results X and Y increases linearly as the amount of moisture Aq increases, the rate of discrepancy Es of the corrected measurement results X and Y does not have any significant relationship with the amount of moisture Aq. This is because the correction to obtain the measurement results Mdr was made using the linear expression as to the amount of moisture Aq in view of the fact that the measurement results Md of the particular component are correlated not with the temperature T or the relative humidity Hm but with the amount of moisture Aq contained in the air. In Example 2 and Example 3 shown in Figs. 5 and 6 again, the variations of the rate of discrepancy Es is reduced, and the correlation between the rate of discrepancy Es and the amount of moisture Aq is also reduced by the correction. The degree of reaction of the sample S with the reagent 73 in the reaction measurement space 13 after the sample S infiltrates into the porous body 74 is considered to depend on the amount of moisture evaporated from the sample S. The inventor of the present invention has considered that the evaporation from the sample S is most related to the amount of moisture Aq in the air taken into the apparatus and hence employed the correction using the polynomial including a variable representing the amount of moisture Aq. This rational correction prevents the analysis accuracy from deteriorating due to the environment in which the analysis apparatus A is placed.

Particularly, the reaction measurement space 13 is maintained at a temperature suitable for the reaction. In this embodiment, the air taken through the air inlet 11 is maintained at a constant temperature. Thus, the correction based on the absolute amount of moisture Aq contained in the air is more suitable than the correction based on the relative humidity Hm measured by the humidity sensor 23.

The correction using the linear expression with respect to the amount of moisture Aq is relatively easy and does not increase the time for the analysis nor complicate the analysis process. Further, since the coefficients a and b determined in advance with respect to each test piece 7 are read from the magnetic card Cd attached to the test piece 7, errors in inputting the coefficients a and b are prevented.

According to this embodiment, e.g. a humidifier for controlling the relative humidity of the reaction measurement space 13 is not necessary. Further, since the test pieces 7 include a reagent 73 in a dry state, liquid other than the sample does not need to be added for the analysis, and any waste liquid is not generated by the analysis. Thus, the analysis apparatus A is reduced in size and kept clean.

The analysis by an optical technique can be performed without bringing the optical sensors 32 into contact with the test pieces 7. Thus, the sample is prevented from scattering, which is suitable for keeping the analysis apparatus A clean.

The analysis method and analysis apparatus according to the present invention are not limited to the foregoing embodiment. The specific structure of the analysis method and analysis apparatus of the present invention may be varied in design in many ways.

As for the correction in the analysis method and analysis apparatus according to the present invention, it is only necessary that the correction is performed based on the amount of moisture contained in the air. Thus, depending on the relationship between the particular component to be analyzed and the amount of moisture, the correction may be performed based on polynomials such as a quadratic expression or a cubic expression instead of a linear expression with respect to the amount of moisture. Further, the correction may be performed using a function with respect to the amount of moisture other than a polynomial.

The temperature sensor 22 and the humidity sensor 23 of the moisture measurer 2 may be arranged at any positions as long as they are on a path from the air inlet 11 to the reaction measurement space 13. When the temperature sensor 22 and the humidity sensor 23 are arranged in the reaction measurement space 13, the moisture measurer 2 serves as a means for directly measuring the amount of moisture contained in the air in the reaction measurement space 13.

The analysis according to the present invention does not necessarily need to be performed by an optical technique. The particular components described above are merely examples, and the concentration of various components can be measured by the present invention. The sample to be analyzed by the present invention is not limited to blood but may be urine, for example.

## Claims

1. An analysis method comprising the steps of:
causing a moist sample to react with a reagent; and
measuring concentration of a particular component contained in the sample based on a state after the reaction of the sample with the reagent;
wherein the reaction step and the measurement step are performed while amount of moisture contained in air in a space accommodating the sample and the reagent is indirectly measured, and
the method further comprises the step of correcting the measurement result of the concentration of the particular component based on the amount of moisture contained in the air.
**characterized in that** the reaction step and the measurement step are performed while air having a known moisture content is being taken from outside into the space accommodating the sample and the reagent whereby the amount of moisture contained in the air in the space accommodating the sample of reagent is indirectly measured by measuring the amount of moisture in the air as set is being taken from outside into the space accommodating the sample and reagent.

2. The analysis method according to claim 1, wherein the reagent is dry before the reaction with the sample .

3. The analysis method according to claim 1, wherein the space accommodating the sample and the reagent is maintained at a constant temperature in the reaction step and the measurement step.

4. The analysis method according to claim 1, wherein the correction step comprises correcting the measurement result of the concentration of the particular component using a polynomial including a variable representing the amount of moisture contained in the air.

5. The analysis method according to claim 4, wherein the polynomial is a linear expression.

6. The analysis method according to claim 1, wherein the measurement step is performed by an optical technique.

7. An analysis apparatus comprising:
a reaction space (13) for causing a moist sample to react with a reagent;
a measurement space (13) for measuring concentration of a particular component contained in the sample based on a state after the reaction of the sample with the reagent;
a particular component concentration measurer (32) for performing said measurement;
a moisture measurer (23) for indirectly measuring amount of moisture contained in air in at least either one of the measurement space (13) or the reaction space (13); and
a corrector (4) for correcting measurement result obtained by the particular component concentration measurer (32) based on the amount of moisture measured by the moisture measurer;
**characterized in that** the analysis apparatus further comprises an air inlet (11) for taking air from outside the analysis apparatus for introduction into the reaction space (13) and the measurement space (13), and **in that**
said moisture measurer is arranged to measure the amount of moisture contained in the air on a path from the air inlet to the reaction space (13) or the measurement space(13) so as to indirectly measure the amount of moisture contained in air in at least either one of the measurement space of the reach on space.

8. The analysis apparatus according to claim 7, further comprising an air outlet (12) for discharging air from the reaction space (13) and the measurement space (13) to the outside.

9. The analysis apparatus according to claim 7, wherein the reagent is dry before the reaction with the sample.

10. The analysis apparatus according to claim 7, further comprising a temperature controller (33) for maintaining temperature in the reaction space (13) and the measurement space (13) constant.

11. The analysis apparatus according to claim 7, wherein the corrector (4) corrects measurement result obtained by the particular component concentration measurer (32) using a polynomial including a variable representing the amount of moisture contained in the air.

12. The analysis apparatus according to claim 11, wherein the polynomial is a linear expression.

13. The analysis apparatus according to claim 7, wherein the particular component concentration measurer performs the measurement by an optical technique.

## Patentansprüche

1. Analyseverfahren, das die folgenden Schritte umfasst:
Bewirken, dass eine feuchte Probe mit einem Reagens reagiert; und
Messen der Konzentration einer bestimmten Komponente, die in der Probe enthalten ist, auf der Grundlage eines Zustandes nach der Reaktion der Probe mit dem Reagens;
wobei der Reaktionsschritt und der Messschritt ausgeführt werden, während die Feuchtigkeitsmenge, die in der Luft in einem Raum enthalten ist, der die Probe und das Reagens enthält, indirekt gemessen wird, und
das Verfahren ferner den Schritt des Korrigierens des Messergebnisses der Konzentration der bestimmten Komponente auf der Grundlage der Feuchtigkeitsmenge umfasst, die in der Luft enthalten ist,
**dadurch gekennzeichnet, dass** der Reaktionsschritt und der Messschritt ausgeführt werden, während Luft, die einen bekannten Feuchtigkeitsgehalt hat, von außen in den Raum aufgenommen wird, der die Probe und das Reagens enthält, wobei die Feuchtigkeitsmenge, die in der Luft im Raum enthalten ist, der Probe und Reagens enthält, indirekt durch Messen der Feuchtigkeitsmenge in der Luft gemessen wird, wie sie von außen in den Raum aufgenommen wird, der die Probe und das Reagens enthält.

2. Analyseverfahren nach Anspruch 1, wobei das Reagens vor der Reaktion mit der Probe trocken ist.

3. Analyseverfahren nach Anspruch 1, wobei der Raum, der die Probe und das Reagens enthält, im Reaktionsschritt und Messschritt auf einer konstanten Temperatur gehalten wird.

4. Analyseverfahren nach Anspruch 1, wobei der Korrekturschritt das Korrigieren des Messergebnisses für die Konzentration der bestimmten Komponente unter Verwendung eines Polynoms umfasst, das eine Variable umfasst, die die Feuchtigkeitsmenge repräsentiert, welche in der Luft enthalten ist.

5. Analyseverfahren nach Anspruch 4, wobei das Polynom ein linearer Ausdruck ist.

6. Analyseverfahren nach Anspruch 1, wobei der Messschritt durch ein optisches Verfahren ausgeführt wird.

7. Analysevorrichtung, umfassend:
einen Reaktionsraum (13) zum Bewirken, dass eine feuchte Probe mit einem Reagens reagiert;
einen Messraum (13) zum Messen der Konzentration einer bestimmten Komponente, die in der Probe enthalten ist, auf der Grundlage eines Zustandes nach der Reaktion der Probe mit dem Reagens;
eine Konzentrationsmesseinrichtung (32) für eine bestimmte Komponente zum Ausführen der Messung;
eine Feuchtigkeitsmessvorrichtung (23) zum indirekten Messen der Feuchtigkeitsmenge, die in der Luft in dem Messraum (13) und/oder Reaktionsraum (13) enthalten ist; und
eine Korrekturvorrichtung (4) zum Korrigieren von Messergebnissen, die mit der Konzentrationsmesseinrichtung (32) für die bestimmte Komponente auf der Grundlage der Feuchtigkeitsmenge erhalten werden, welche durch die Feuchtigkeitsmessvorrichtung gemessen wird;
**dadurch gekennzeichnet, dass** die Analysevorrichtung ferner einen Lufteinlass (11) zum Aufnehmen von Luft von außerhalb der Analysevorrichtung zum Einführen in den Reaktionsraum (13) und den Messraum (13) umfasst, und dadurch, dass
die Feuchtigkeitsmessvorrichtung zum Messen der Feuchtigkeitsmenge ausgelegt ist, die in der Luft auf einem Weg vom Lufteinlass bis zum Reaktionsraum (13) oder Messraum (13) enthalten ist, um so indirekt die Feuchtigkeitsmenge zu messen, die in der Luft in dem Messraum und/oder Reaktionsraum enthalten ist.

8. Analysevorrichtung nach Anspruch 7, die ferner einen Luftauslass (12) zum Ablassen von Luft aus dem Reaktionsraum (13) und dem Messraum (13) nach draußen umfasst.

9. Analysevorrichtung nach Anspruch 7, wobei das Reagens vor der Reaktion mit der Probe trocken ist.

10. Analysevorrichtung nach Anspruch 7, die ferner einen Temperaturregler (33) zum Konstanthalten der Temperatur im Reaktionsraum (13) und Messraum (13) umfasst.

11. Analysevorrichtung nach Anspruch 7, wobei die Korrekturvorrichtung (4) Messergebnisse, die durch die Konzentrationsmesseinrichtung (32) für die bestimmte Komponente erhalten werden, unter Verwendung eines Polynoms korrigiert, welches eine Variable umfasst, die die Feuchtigkeitsmenge repräsentiert, welche in der Luft enthalten ist.

12. Analysevorrichtung nach Anspruch 11, wobei das Polynom ein linearer Ausdruck ist.

13. Analysevorrichtung nach Anspruch 7, wobei die Konzentrationsmesseinrichtung für die bestimmte Komponente die Messung durch ein optisches Verfahren ausführt.

## Revendications

1. Procédé d'analyse comprenant les étapes qui consistent à :
amener un échantillon humide à réagir avec un réactif et
mesurer la concentration d'un composant particulier que contient l'échantillon sur la base de la situation qui prévaut après la réaction de l'échantillon avec le réactif,
l'étape de réaction et l'étape de mesure étant exécutées pendant que la teneur en humidité contenue dans l'air présent dans l'espace qui loge l'échantillon et le réactif est mesurée indirectement et
le procédé comportant en outre l'étape qui consiste à corriger le résultat de la mesure de la concentration du composant particulier en fonction de la quantité d'humidité que contient l'air,
**caractérisé en ce que**
l'étape de réaction et l'étape de mesure sont exécutées pendant que de l'air dont la teneur en humidité est connue est prélevé depuis l'extérieur pour être introduit dans l'espace qui loge l'échantillon et le réactif,
la quantité d'humidité contenue dans l'air présent dans l'espace qui loge l'échantillon et le réactif étant mesurée indirectement par la mesure de la quantité d'humidité que contient l'air lorsqu'il est prélevé de l'extérieur pour être introduit dans l'espace qui loge l'échantillon et le réactif.

2. Procédé d'analyse selon la revendication 1, dans lequel le réactif est sec avant la réaction avec l'échantillon.

3. Procédé d'analyse selon la revendication 1, dans lequel l'espace qui loge l'échantillon et le réactif est maintenu à une température constante au cours de l'étape de réaction et de l'étape de mesure.

4. Procédé d'analyse selon la revendication 1, dans lequel l'étape de correction comprend la correction du résultat de la mesure de la concentration du composant particulier en utilisant un polynôme qui contient une variable qui représente la quantité d'humidité que contient l'air.

5. Procédé d'analyse selon la revendication 4, dans lequel le polynôme est une expression linéaire.

6. Procédé d'analyse selon la revendication 1, dans lequel l'étape de mesure est exécutée en utilisant une technique optique.

7. Appareil d'analyse comprenant :
un espace de réaction (13) qui amène un échantillon humide à réagir avec un réactif,
un espace de mesure (13) qui mesure la concentration d'un composant particulier que contient l'échantillon sur la base de la situation qui prévaut après la réaction de l'échantillon avec le réactif,
un dispositif (32) de mesure de la concentration du composant particulier, qui exécute ladite mesure,
un dispositif (23) de mesure d'humidité qui mesure indirectement la quantité d'humidité que contient l'air présent dans l'espace de mesure (13) et/ou dans l'espace de réaction (13) et
un dispositif de correction (4) qui corrige le résultat de la mesure obtenue par le dispositif (32) de mesure de la concentration du composant particulier sur la base de la quantité d'humidité mesurée par le dispositif de mesure d'humidité,
**caractérisé en ce que**
l'appareil d'analyse comprend en outre une admission d'air (11) qui permet de prélever de l'air à l'extérieur de l'appareil d'analyse pour l'introduire dans l'espace de réaction (13) et dans l'espace de mesure (13) et
**en ce que** ledit dispositif de mesure d'humidité est agencé de manière à mesurer la quantité d'humidité que contient l'air sur un parcours qui s'étend entre l'admission d'air et l'espace de réaction (13) ou l'espace de mesure (13), de manière à mesurer indirectement la quantité d'humidité que contient l'air présent dans l'espace de mesure et/ou dans l'espace de réaction.

8. Appareil d'analyse selon la revendication 7, qui comprend en outre une sortie d'air (12) qui permet de décharger à l'extérieur l'air provenant de l'espace de réaction (13) et de l'espace de mesure (13).

9. Appareil d'analyse selon la revendication 7, dans lequel le réactif est sec avant sa réaction avec l'échantillon.

10. Appareil d'analyse selon la revendication 7, comprenant en outre un contrôleur de température (33) qui maintient constante la température qui règne dans l'espace de réaction (13) et dans l'espace de mesure (13).

11. Appareil d'analyse selon la revendication 7, dans lequel le dispositif de correction (4) corrige le résultat de la mesure obtenue par le dispositif (32) de mesure de la concentration du composant particulier en utilisant un polynôme qui contient une variable qui représente la quantité d'humidité que contient l'air.

12. Appareil d'analyse selon la revendication 11, dans lequel le polynôme est une expression linéaire.

13. Appareil d'analyse selon la revendication 7, dans lequel le dispositif de mesure de la concentration du composant particulier exécute la mesure en utilisant une technique optique.
